# EUROPEAN PATENT SPECIFICATION

(11) **EP 2 532 538 B1**
(45) Date of publication and mention of the grant of the patent: **05.08.2015**
(21) Application number: 12171366.3
(22) Date of filing: 08.06.2012
(51) Int. Cl.: B60F 3/00, B62B 13/18, B62M 29/00, B63B 1/14, B63B 43/14, B63H 1/34, B62B 15/00, B62B 19/00

(54) **Tracked recreational snow vehicle being converted to a personal watercraft by a conversion kit**
Schneemobil mit Raupenantrieb für die Freizeit, umgewandelt in ein Jetboot durch einen Umbausatz
Motoneige de loisirs à chenille convertie en une motomarine par un kit de conversion

(30) Priority: 10.06.2011 CA 2742546
(43) Date of publication of application: 12.12.2012
(73) Proprietor: MacDonald, Kenneth James, Malakwa, British Columbia V0E 2J0 (CA)
(72) Inventor: MacDonald, Kenneth James, Malakwa, British Columbia V0E 2J0 (CA)
(74) Representative: Perkins, Sarah

(56) References cited:
- FR-A1- 2 565 907
- US-A- 3 785 330
- US-A- 4 204 582
- US-A- 4 737 390
- US-A- 5 988 090
- US-A- 6 062 156
- US-B2- 6 505 694

## Description

### FIELD OF THE INVENTION

The present invention relates generally to extending the use of recreational vehicles designed for winter use in snow, such as a snowmobile, so that the vehicle may be used on water. It is an aim of the invention to permit the use of a snowmobile as a personal watercraft through the use of easy-to-install accessory flotation devices to the vehicle, using simple mounting and adjustment mechanisms, and without complex or cumbersome drive-adapters or other peripheral devices or modifications.

### BACKGROUND OF THE INVENTION

Tracked recreational vehicles for use on snow and winter terrain have been known for some time, and for nearly as long there has been a perceived need to provide for ways to use them on water, either as watercraft or for safety in travel over frozen bodies of water where there is a danger of breaking through the ice and submerging (see for example US 3,646,904 to Lanning et al.*,* which describes an early snowmobile with flotation and water drive means).

US 6,595,812 to Haney solves the problem by providing a drive-in boat hull, into which a snowmobile may be inserted and sealed for use over water, the boat hull providing flotation, which leave the skis in place and provide for amphibious (water, snow and ice) operation of the conjoined vehicle. The skis are provided with additional surface area to act as forward steering elements while waterborne, and the track is used to provide propulsion in both water and over snow and ice. By attempting to convert to an amphibious vehicle, performance as a watercraft is compromised with a high-drag broad single hull and awkward steering components, the complexity of a series of water-tight seals, and the like.

US 4,893,692 to Smith makes a snowmobile approaches the problem of safety when a rider breaks through ice and falls into the water, by including waterproof hull components and skis with pontoon-like flotation characteristics to provide buoyancy in the event of such an accident. This vehicle is not designed as a watercraft for recreational purposes, but rather as a snow craft with buoyancy for safety purposes.

US 3,611,979 to Hebert discloses the replacement of mechanical suspension elements with a resilient flotation casing (bladder-like bag) disposed between two endless drive tracks to provide a small, buoyant amphibious vehicle for use over snow and ice, and water. This vehicle compromises suspension system performance for waterborne flotation, among other problems.

US 3,646,904, as noted above, discloses a set of two pontoons with mounting arrangements onto which a partially disassembled snowmobile can be bolted, and which can attach the pontoons' included propeller and rudder systems to the engine and operator control systems, respectively, of the snowmobile; this provides a pleasure watercraft powered by the snowmobile's engine, but requires removal of the snowmobile's track, and complex connections of the engine and steering controls to additional propeller and rudder systems on the pontoons.

US 6,062,156 to Radke et al*.* discloses a snowmobile - powered watercraft with floats for skis and a massive bolt-on U-shaped rear float which surrounds the snowmobile, enclosing its rear-end. The rear enclosure (the joining part of the "U" shaped hill, behind the vehicle between the two side parts of the hull, one each side of the vehicle) provides an adjustable trim tab, added bulk, and unnecessary weight, manufacturing complexity, drag, and a single point of failure.

US 3,785,330 to Fox, discloses an air powered vehicle having a specific structural design required for it to be operational on land, water, ice or snow. Such a design includes a front steerable surface assembly and specific susupension means including struts that take the form of shock absorbers. Surface engaging assemblies are attached to the frame of the air powered vehicle via a clevis and by means of a pivotable hook latch.

### SUMMARY OF THE INVENTION

To mitigate some of the problems with the prior art, this system provides a tracked recreational snow vehicle being converted to a personal watercraft by a conversion kit according to claim 1. In a first aspect the conversion kit includes:
1. A flotation device to replace the ski or each ski if several are included of a recreational vehicle to provide buoyancy to the front of the vehicle as well as to provide steering while the vehicle is in motion;
2. A set of flotation devices adjustably mounted to the sides of the vehicle, rearward of the front flotation device(s), to provide buoyancy to the rear of the vehicle while leaving at least a portion of the lower part of the vehicle's track in contact with the water when the vehicle is waterborne, in order that the track can be operated to power the vehicle's motion through and over the water.

The flotation device(s) replacing the ski(s) can be equipped with one or more integrated or removable wheels in the flotation device's lower-most part for amphibious operation, or simply for ease of loading and unloading the vehicle to and from the water.

The flotation device(s) can be pointed at their front-most ends, and can be of any hydrodynamically useful hull shape or form.

The mounting bracket(s) for the front flotation device(s) are designed to be compatible with the mounting elements by which the ski(s) replaced by the device(s) are attached to the vehicle's steering system.

The mounting brackets for the rear flotation devices are attached to holes drilled in the tunnel of the vehicle via an arm or arms which attach the two flotation devices together, parallel to each other, aligned longitudinally with the front-to-rear axis of the vehicle; the arms are threaded through the track and vehicle suspension before being attached to both of the flotation devices, and then attached to the vehicle near the bottom of the vehicle's tunnel. Means are included on the arms and/or by drilling additional holes in the sides of the tunnel, to adjust the height of the vehicle above the bottom of the flotation devices - this can adjust the angle of attack of the vehicle and its disposition in the water when idle and in use under powered motion.

The arms may be made of 2"X2" square aluminum tubing, or of any other suitable material or dimensions.

The rear mounting of the flotation devices may be accomplished by welding or otherwise attaching or forming a plate to each side of each arm, each spaced to be directly beside the inside vertical wall of the tunnel, one per side, to be bolted to the tunnel through holes in the brackets which mate with holes in the tunnel. Other mounting methods may alternatively be used.

The flotation devices of the invention may be all the same size, and thus interchangeable, or they may be of different sizes between the front and back sets.

The flotation devices can be made using any suitable means of making boat-like hulls. In an embodiment, they are made by thermally setting a plastic to match a mold of the device's shape, filling the thermally set plastic hull shape with suitable foam, making an upper or lid part of suitable material to seal to the hull shape's upper and outer edges, to provide structural rigidity to the device itself, and to provide mounting points for the hardware by which the device is to be attached to the vehicle. The hull(s) and lid(s) may be of any suitable material and color, and should be sealed or filled with foam to avoid taking on water and maintain buoyancy. The lid may have a non-slip top surface for part or all of its area.

In operation, the rear flotation devices will provide sufficient buoyancy to hold the vehicle sufficiently out of the water so that, at rest, the lower part of the vehicle's track is in the water and the vehicle's motor, passenger seat, passenger are out of the water; when operated at speed over water, the hull shape of the rear flotation devices may plane or otherwise rise out of the water to some extent, which will act to raise the vehicle and its track with respect to the water's surface - this is to be controlled to keep the track in contact with the water in order to enable the track to provide motive power to the vehicle, and control is effected by the initial placement of the flotation devices with respect to the vehicle's track, its weight and the hull displacement of the flotation devices, and the amount of rise or vertical change in location of the flotation device with respect to the water surface when the vehicle and hulls are moving in the water at various speeds.

In operation, at rest the front flotation device(s) will provide buoyancy to the vehicle in the water sufficient to keep the vehicle from sinking and wetting the passenger, engine, and other undesirable parts of the vehicle; and when in motion through the water, the front flotation device(s) will provide buoyancy and lift to keep the vehicle afloat and at an appropriate or desired attitude (pitch) to the water, while also providing steering control to the vehicle's operator by turning the vehicle in response to the operator causing the flotation device(s) to turn (rotate roughly on the plane of the water surface about their attachment point and act as steering rudders or elements controlled by the operator using the steering mechanisms of the vehicle), all in a predictable and repeatable way.

### BRIEF DESCRIPTION OF THE DRAWINGS

Embodiments of the present invention will now be described, by way of example only, with reference to the attached Figures, wherein:

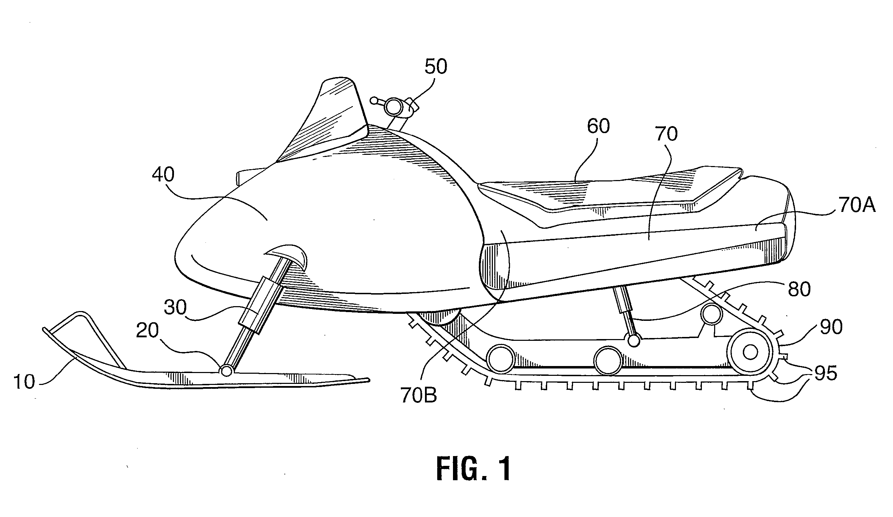

Fig. 1 is a pictorial side elevation of the Left Hand Side of a tracked recreational snow vehicle, illustrating typical components and parts of the type of vehicle, not to scale;

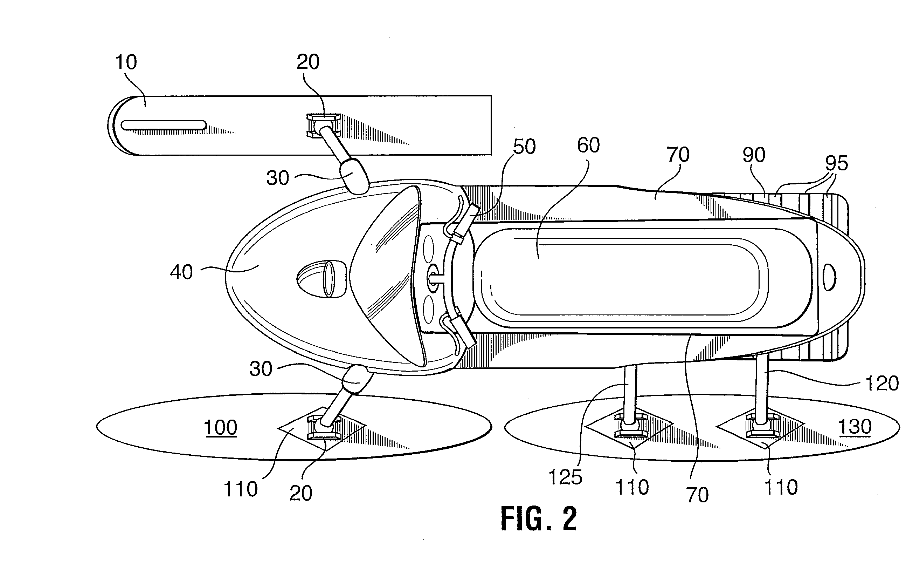

Fig. 2 is a pictorial top elevation of a tracked recreational snow vehicle, illustrating on its Right Hand Side the typical configuration of such a vehicle for use in snow, and illustrating on its Left Hand Side an exemplary configuration of this invention;

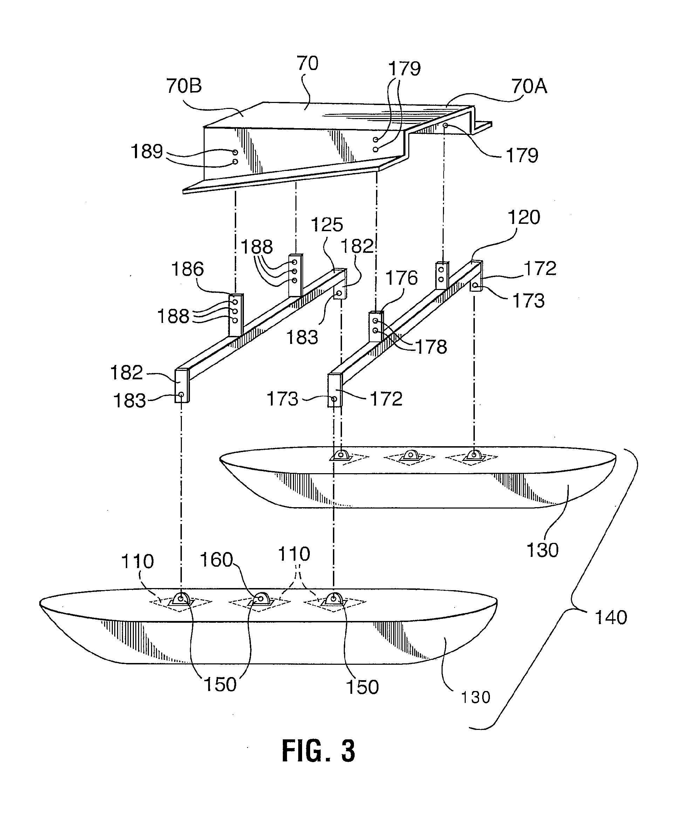

Fig. 3 is an exploded pictorial perspective, not to scale, of an exemplary pontoon, rear mounting elements, and the tunnel or chassis element of a typical tracked recreational snow vehicle;

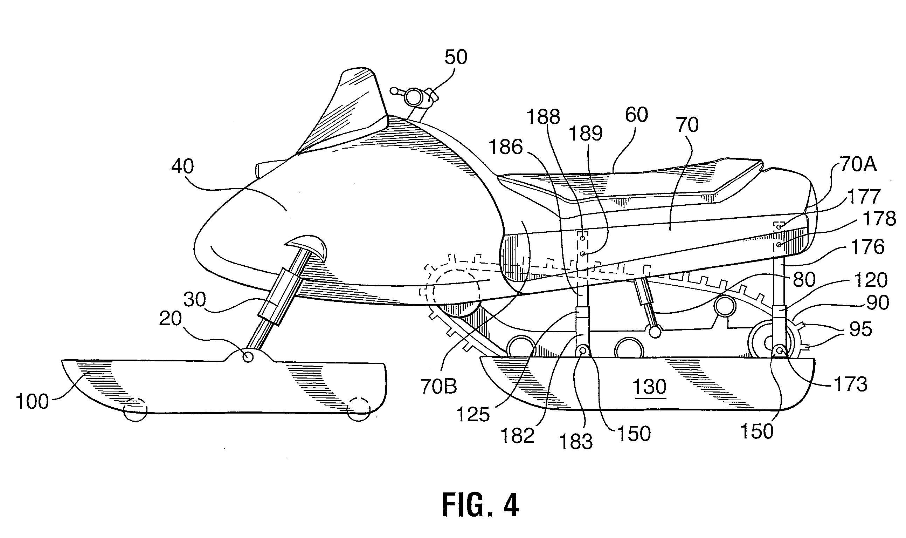

Fig. 4 is a pictorial side elevation of the Left Hand Side of a tracked recreational snow vehicle showing the pontoons of the invention installed, not to scale;

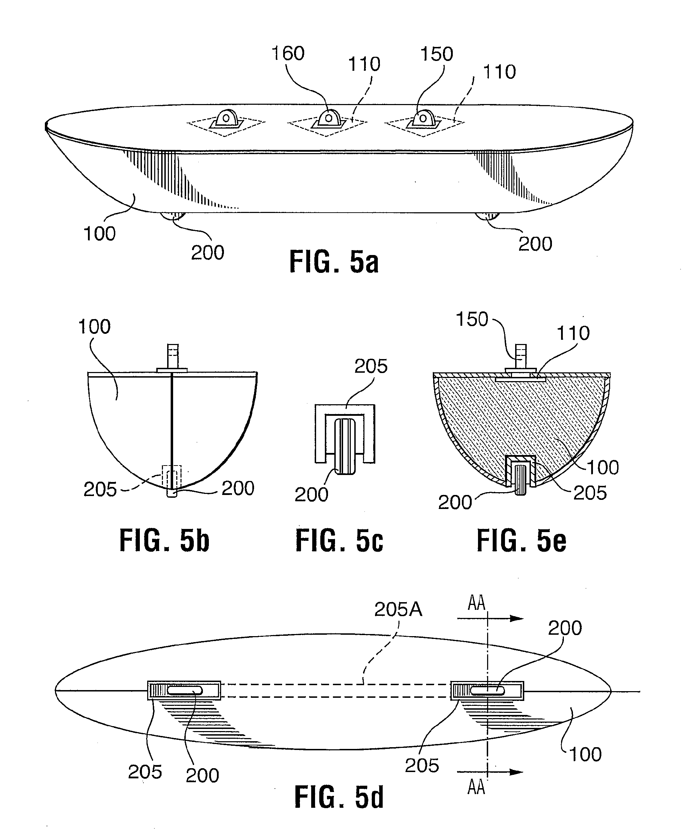

Fig. 5a is a pictorial perspective elevation of an exemplary forward pontoon of the invention showing optional keel-mounted wheels;
Fig. 5b is a front elevation of the same pontoon;
Fig. 5c is a front elevation of the metal angle showing a wheel mounted on an attached axle;
Fig. 5d is a bottom perspective pictorial of the same hull showing two wheels with associated metal angles, and line AA;
Fig. 5e is a cross-section of the same pontoon along the vertical plane of line AA.

### DETAILED DESCRIPTION

Generally, the present invention provides a kit for conversion of a tracked recreational snow vehicle for waterborne use by the addition of pontoons which float the vehicle when on the water, exposing the track to the water to provide for propulsion and utilizing the vehicle's steering gear to move its installed front pontoons to maneuver the vehicle when waterborne.

The kit's components are designed to be mounted to existing or easily implemented mounting points on the vehicle's chassis and steering gear so that the utility of the vehicle can be extended beyond its use on snow, to include its use on water.

Optionally, wheels can be included in its front pontoon(s) in order to provide easy access to and egress from water and land, for instance being drivable on a boat ramp into and out of a lake without special equipment or effort.

### USE OF THE KIT

### Installation proceeds as follows:

A front ski 10 is removed from the vehicle's steering mount 20 and a pontoon 100 is mounted to the same steering mount 20 using hardware 160 installed at the related reinforced mounting point 110. The hardware 160 need only to be compatible with the steering mount 20 on the vehicle, and to provide the capability of holding the pontoon pointing in the direction of the steering gear, parallel to another pontoon 100 which would also be mounted to the steering mount 20 on the vehicle's opposite side (if the vehicle originally had two skis). The ski removal and pontoon replacement is repeated on the other side of the vehicle should the vehicle have had two skis.

A rearward rear mounting bar 120 and a forward rear mounting bar 125 may be threaded through the vehicle's track 90 or otherwise suitably placed. The rearward rear mounting bar 120 is near to the rearward end 70A of the vehicle's tunnel 70 in a position that will not interfere either with the track 90 or the vehicle's track or rear suspension 80 in its travel or other running gear such as idlers or similar elements (not specifically shown), with the bar 120 aligned so that the attached upper rear mount plates - rearward 176 extend upwardly inside the tunnel 70 to where the upper rear mount holes - rearward 178 align with rearward tunnel mount holes 183 in the tunnel 70 and are attached, for example, by being bolted onto the tunnel 70.

Similarly, the forward rear mounting bar 125 is nearer to the forward end of the tunnel 70B than the rearward end 70A, and will be mounted in a position that will not interfere either with the track 90 or the vehicles rear suspension 80 in its travel, nor with other running gear such as idlers or similar elements (not specifically shown), with the bar 125 aligned so that the attached upper rear mount plates - forward 186 extend upwardly inside the tunnel 70 to where the upper rear mount holes - forward 188 align with forward tunnel mount holes 189 in the tunnel and are attached, for example, be being bolted onto the tunnel 70.

In either bar's case, the system of upper and lower pairs of mount plates attached to each bar, with holes in the mount plates for alignment with the tunnel and the pontoon, can be modified to provide more holes in the upper mount plates and/or the tunnel's walls to provide flexibility in vertical adjustment of the position of the pontoon with respect to the track and the surface of the water when waterborne.

The pontoons can be sized so that all four used on a vehicle are the same size and thus capable of being rotated in the event a mount point 20, 183, 193 on the pontoon is damaged or worn, as well as to simplify manufacture.

The front pontoons will be limited in length to fit the geometry of the vehicle's steering gear and clearances.

Wheels 200 may be fitted to the keel of the pontoons, for example by embedding or mounting an inverted U-shaped metal part 205 or similar wheel carrier in or on the keel of a pontoon, and providing an axle through the wheel 200 affixed at either end to the sides of the U-shaped part 205. The U-shaped part 205 may extend for the length of the keel to provide steering stability, much like a strake or hull element, and could also provide longitudinal rigidity. The wheels and mounts can be removable or demountable.

The hulls of the pontoons can be constructed from thermoplastic sheets formed over appropriate hull-shaped forms, then filled with foam and enclosed by a plastic or metal, but solid, lid. The lid may have structural reinforcement 110 at the mounting points on the pontoon's top surface. The top surface may have an anti-slip surface, and could include in-hull storage (not shown).

In the preceding description, for purposes of explanation, numerous details are set forth in order to provide a thorough understanding of the embodiments of the invention. However, it will be apparent to one skilled in the art that these specific details are not required in order to practice the invention. Well-known structures may be shown in generic form in order not to obscure the nature and working of this invention.

The above-described embodiments of the invention are intended to be examples only. Alterations, modifications and variations can be effected to the particular embodiments by those of skill in the art without departing from the scope of the invention, which is defined solely by the claims appended hereto.

**LEGEND FOR DRAWINGS**

| Number | Feature |
|---|---|
| 10 | Ski |
| 20 | Ski Attachment Point |
| 30 | Steerable Front Suspension |
| 40 | Cowling/Nacelle (covers engine, transmission, etc) |
| 50 | Operator Controls (steering, throttle, etc) |
| 60 | Operator/Passenger Seat |
| 70 | Tunnel/Chassis |
| 70A | Rearward end of Tunnel |
| 70B | Forward end of Tunnel |
| 80 | Track or Rear Suspension |
| 90 | Infinite Flexible Track |
| 95 | Track Lugs (traction features, paddles, wear bars, cleats, studs) |
| 100 | Front Float or Pontoon |
| 110 | Reinforced Mounting Points on Pontoons |
| 120 | Rearward Rear Mounting Bar |
| 125 | Forward Rear Mounting Bar |
| 130 | Rear Float or Pontoon |
| 140 | Generic Pontoon (either 100 or 130) |
| 150 | Rear Float or Pontoon Attachment Points |
| 160 | Forward Pontoon Attachment Point |
| 172 | Lower Rear Mount Plate - Rearward |
| 173 | Lower Rear Mount Hole- Rearward |
| 176 | Upper Rear Mount Plate-Rearward |
| 178 | Upper Rear Mount Holes - Rearward |
| 179 | Rearward Tunnel Mount Holes |
| 182 | Lower Rear Mount Plate - Forward |
| 183 | Lower Rear Mount Hole - Forward |
| 186 | Upper Rear Mount Plate - Forward |
| 188 | Upper Reear Mount Holes - Forward |
| 189 | Forward Tunnel Mount Holes |
| 200 | Wheels |
| 205 | U-Shaped metal angle at keel |
| 205A | Optionally full-length U-shaped angle at keel |

## Claims

1. A tracked recreational snow vehicle being converted to a personal watercraft by a conversion kit, the vehicle having a front, a rear, two sides, a track (90), a steering system, vehicle suspension (30, 80), and a tunnel (70) having two sides and a plurality of holes (179, 189), the conversion kit comprising:
a. at least one front flotation device (100) to replace at least one ski (10) to provide buoyancy to the front of the vehicle as well as to provide steering while the vehicle is in motion,
b. a set of rear flotation devices (130) adjustably mountable to the sides of the vehicle, the rear flotation devices (130) being mountable rearward of the at least one front flotation device (100); and
c. mounting brackets (172, 176, 182, 186) and at least one arm (120, 125) having attached thereto the set of rear flotation devices (130), the mounting brackets (176, 186) being attachable to the tunnel (70) via the holes (179, 189), the rear flotation devices (130) being parallel to each other and aligned longitudinally with the front-to-rear axis of the vehicle, and the at least one arm (120, 125) being threadable through the track (90) and the vehicle suspension (80) near the bottom of the tunnel (70); and the distance between the tunnel (70) and the bottom of the rear flotation devices (130) being adjustable, the set of rear flotation devices (130) providing buoyancy to the rear of the vehicle while leaving at least a portion of a lower part of the track (90) in contact with the water when the vehicle is waterborne, in order that the track (90) is operable to power the vehicle's motion through and over the waster.

2. The tracked recreational snow vehicle of claim 1 wherein the at least one flotation device (100) is equipped with one or more integrated or removable wheels (200) in the at least one front flotation device's (100) lower-most part for amphibious operation, or for ease of loading and unloading the vehicle to and from the water.

3. The tracked recreational snow vehicle of claim 1 wherein the at least one front flotation device (100) is pointed at its front-most end, and is of any hydrodynamically useful hull shape or form.

4. The tracked recreational snow vehicle of claim 1 further comprising at least one mounting bracket for the at least one front flotation device (100), wherein the at least one ski (10) is attached to the steering system by mounting elements, and the at least one mounting bracket is designed to be compatible with the mounting elements.

5. The tracked recreational snow vehicle of claim 1 where means are included on the at least one arm (120, 125) and/or additional holes (179, 189) are included in the sides of the tunnel for adjusting the distance between the tunnel (70) and the bottom of the rear flotation devices (130) to adjust the angle of attack of the vehicle and its disposition in the water when idle and in use under powered motion.

6. The tracked recreational snow vehicle of claim 1 wherein at least one arm (120, 125) is made of 2" x 2" square aluminum tubing.

7. The tracked recreational snow vehicle of claim 1 where the attaching of the rear flotation devices (130) to the vehicle is accomplished by welding a plate to each side of the at least one arm (120, 125), the plates being spaced to be directly beside the inside vertical wall of the tunnel (70), one per side, to be bolted to the tunnel (70) through holes in the plates which mate with holes (179, 189) in the tunnel (70).

8. The tracked recreational snow vehicle of claim 1 wherein the front (100) and rear (130) flotation devices are all the same size.

9. The tracked recreational snow vehicle of claim 1 wherein the front (100) and rear (130) flotation devices are of different sizes.

10. The tracked recreational snow vehicle of claim 1 wherein the front (100) and rear (130) flotation devices each have a hull.

11. The tracked recreational snow vehicle of claim 10 where the hulls of the front (100) and rear (130) flotation devices comprise thermally set plastic filled with suitable foam, and an upper or lid part of suitable material to seal to the hull shape's upper and outer edges, which provides structural rigidity to the flotation device, mounting points being provided for the hardware by which the flotation device is to be attached to the vehicle.

12. The tracked recreational snow vehicle of claim 1 wherein at least one of the front (100) and rear (130) flotation devices has a non-slip top surface for at least a portion of its area.

13. The tracked recreational snow vehicle of claim 10 wherein the vehicle further comprises a motor, a passenger seat (60), and wherein when the kit is installed on the vehicle and when the vehicle is in operation, the vehicle is a watercraft whereby the rear flotation devices (130) provide sufficient buoyancy to hold the vehicle sufficiently out of the water so that, at rest, the lower part of the vehicle's track (90) is in the water and the motor, passenger seat (60), and passenger are out of the water; and when the vehicle is operated at speed over water, the hull shape of the rear flotation devices (130) may plane or otherwise rise out of the water to raise the vehicle and its track (90) with respect to the water's surface in a way which is controlled to keep the track (90) in contact with the water in order to enable the track (90) to provide propulsive power to the vehicle, and control is effected by the initial placement of the rear flotation devices (130) with respect to the vehicle's track, its weight and the displacement of the hull of the rear flotation devices (130), and the amount of rise or vertical change in location of the front and rear flotation devices (100, 130) with respect to the water surface when the vehicle and hulls are moving in the water at various speeds.

14. The use of a tracked recreational snow vehicle according to claim 1 as a personal watercraft, whereby the rear (130) flotation devices provide sufficient buoyancy to the rear of the vehicle to hold at least a portion of a lower part of the track (90) in contact with the water when the vehicle is waterborne, in order that the track (90) is operable to power the vehicle's motion through and over the water.

## Patentansprüche

1. Kettengetriebenes Freizeit-Schneefahrzeug, das durch einen Umrüstsatz in ein Wassermotorrad umgewandelt wird, das Fahrzeug umfassend eine Vorderseite, eine Rückseite, zwei Seiten, eine Kette (90), ein Lenksystem, eine Fahrzeugaufhängung (30, 80) und einen Tunnel (70) mit zwei Seiten und einer Mehrzahl von Löchern (179, 189), der Umrüstsatz umfassend:
a. mindestens einen vorderen Schwimmkörper (100) zum Ersetzen von mindestens einem Ski (10), um für den Auftrieb an der Vorderseite des Fahrzeugs zu sorgen sowie die Lenkung zu ermöglichen, während sich das Fahrzeug in Bewegung befindet,
b. einen Satz hinterer Schwimmkörper (130), die verstellbar an den Seiten des Fahrzeugs montiert werden können, wobei die hinteren Schwimmkörper (130) hinter dem mindestens einen vorderen Schwimmkörper (100) montiert werden können; und
c. Montagebügel (172, 176, 182, 186) und mindestens einen Arm (120, 125), an dem der Satz hinterer Schwimmkörper (130) befestigt ist,
wobei die Montagebügel (176, 186) über die Löcher (179, 189) an dem Tunnel (70) befestigt werden können, die hinteren Schwimmkörper (130) parallel zueinander sind und längs zur Vorderseiten-Rückseiten-Achse des Fahrzeugs ausgerichtet sind und der mindestens eine Arm (120, 125) durch die Kette (90) und die Fahrzeugaufhängung (80) in der Nähe der Unterseite des Tunnels (70) hindurch einführbar ist; und der Abstand zwischen dem Tunnel (70) und der Unterseite der hinteren Schwimmkörper (130) einstellbar ist, wobei der Satz hinterer Schwimmkörper (130) für den Auftrieb an der Rückseite des Fahrzeugs sorgt, während mindestens ein Abschnitt eines unteren Teils der Kette (90) in Kontakt mit dem Wasser bleibt, wenn sich das Fahrzeug im Wasser befindet, damit die Kette (90) betrieben werden kann, um für den Antrieb zur Bewegung des Fahrzeugs durch und über das Wasser zu sorgen.

2. Kettengetriebenes Freizeit-Schneefahrzeug gemäß Anspruch 1, wobei der mindestens eine Schwimmkörper (100) mit einem oder mehreren integrierten oder abnehmbaren Rädern (200) in dem untersten Teil des mindestens einen Schwimmkörpers (100) ausgestattet ist, um einen Betrieb als Amphibienfahrzeug zu ermöglichen oder um das Verfrachten des Fahrzeugs in das Wasser und aus dem Wasser heraus zu erleichtern.

3. Kettengetriebenes Freizeit-Schneefahrzeug gemäß Anspruch 1, wobei der mindestens eine Schwimmkörper (100) an seinem vordersten Ende spitz zuläuft und eine hydrodynamisch günstige Rumpfform oder -gestalt aufweist.

4. Kettengetriebenes Freizeit-Schneefahrzeug gemäß Anspruch 1, des Weiteren umfassend mindestens einen Montagebügel für den mindestens einen Schwimmkörper (100), wobei der mindestens eine Ski (10) durch Montagelemente an dem Lenksystem befestigt ist und der mindestens eine Montagebügel so ausgelegt ist, dass er mit den Montageelementen kompatibel ist.

5. Kettengetriebenes Freizeit-Schneefahrzeug gemäß Anspruch 1, wobei an dem mindestens einen Arm (120, 125) Vorrichtungen vorgesehen sind und/oder zusätzliche Löcher (179, 189) in den Seiten des Tunnels enthalten sind, um den Abstand zwischen dem Tunnel (70) und der Unterseite der hinteren Schwimmkörper (130) zu verstellen, um den Anstellwinkel des Fahrzeugs und seine Lage im Wasser in Ruhe sowie bei Verwendung mit angetriebener Bewegung einzustellen.

6. Kettengetriebenes Freizeit-Schneefahrzeug gemäß Anspruch 1, wobei mindestens ein Arm (120, 125) aus Aluminium-Vierkantprofil mit 5,08 x 5,08 cm (2 x 2 Zoll) besteht.

7. Kettengetriebenes Freizeit-Schneefahrzeug gemäß Anspruch 1, wobei die Befestigung der hinteren Schwimmkörper (130) an dem Fahrzeug bewerkstelligt wird, indem eine Platte an jeder Seite des mindestens einen Arms (120, 125) angeschweißt wird, wobei die Platten einen solchen Abstand aufweisen, dass sie sich direkt neben der vertikalen Innenwand des Tunnels (70) befinden, und zwar eine pro Seite, sodass sie durch Löcher in den Platten, die zu Löchern (179, 189) in dem Tunnel (70) passen, mit dem Tunnel (70) verschraubt werden können.

8. Kettengetriebenes Freizeit-Schneefahrzeug gemäß Anspruch 1, wobei die vorderen (100) und hinteren (130) Schwimmkörper alle dieselbe Größe aufweisen.

9. Kettengetriebenes Freizeit-Schneefahrzeug gemäß Anspruch 1, wobei die vorderen (100) und hinteren (130) Schwimmkörper unterschiedliche Größen aufweisen.

10. Kettengetriebenes Freizeit-Schneefahrzeug gemäß Anspruch 1, wobei die vorderen (100) und hinteren (130) Schwimmkörper jeweils einen Rumpf haben.

11. Kettengetriebenes Freizeit-Schneefahrzeug gemäß Anspruch 10, wobei die Rümpfe der vorderen (100) und hinteren (130) Schwimmkörper aus thermisch abbindendem Kunststoff bestehen, der mit einem geeigneten Schaum gefüllt ist, und einem Ober- oder Abdeckteil aus geeignetem Material umfassen, der fest mit den Ober- und Außenkanten der Rumpfform verbunden ist und dem Schwimmkörper strukturelle Stabilität verleiht, wobei Befestigungspunkte für die Hardware vorgesehen sind, an denen der Schwimmkörper an dem Fahrzeug befestigt wird.

12. Kettengetriebenes Freizeit-Schneefahrzeug gemäß Anspruch 1, wobei mindestens einer der vorderen (100) und hinteren (130) Schwimmkörper auf mindestens einem Abschnitt seiner Fläche eine rutschfeste Oberfläche aufweist.

13. Kettengetriebenes Freizeit-Schneefahrzeug gemäß Anspruch 10, wobei das Fahrzeug des Weiteren einen Motor und einen Passagiersitz (60) umfasst, und wobei - wenn der Umrüstsatz an dem Fahrzeug installiert und das Fahrzeug in Betrieb ist - das Fahrzeug ein Wassermotorrad ist, bei dem die hinteren Schwimmkörper (130) für ausreichend Auftrieb sorgen, um das Fahrzeug ausreichend aus dem Wasser herauszuhalten, sodass sich - im Ruhezustand - der untere Teil der Fahrzeugkette (90) im Wasser befindet und der Motor, der Passagiersitz (60) und der Passagier sich außerhalb des Wassers befinden; und wenn das Fahrzeug mit Geschwindigkeit über das Wasser bewegt wird, die Rumpfform der hinteren Schwimmkörper (130) gleiten oder sich anderweitig aus dem Wasser erheben kann, um das Fahrzeug und seine Kette (90) im Verhältnis zur Wasseroberfläche kontrolliert so anzuheben, dass die Kette (90) im Kontakt mit dem Wasser bleibt, um es der Kette (90) zu ermöglichen, dem Fahrzeug die Antriebskraft zu liefern, und die Kontrolle bewirkt wird durch die anfängliche Platzierung der hinteren Schwimmkörper (130) im Verhältnis zur Fahrzeugkette, durch das Gewicht des Fahrzeugs und die Verdrängung des Rumpfs der hinteren Schwimmkörper (130) und durch den Betrag des Anhebens bzw. der vertikalen Lageänderung der vorderen und hinteren Schwimmkörper (100, 130) im Verhältnis zur Wasseroberfläche, wenn sich das Fahrzeug und die Rümpfe mit verschiedenen Geschwindigkeiten im Wasser bewegen.

14. Verwendung des kettengetriebenen Freizeit-Schneefahrzeugs gemäß Anspruch 1 als Wassermotorrad, wobei die hinteren (130) Schwimmkörper für ausreichend Auftrieb an der Rückseite des Fahrzeugs sorgen, um mindestens einen Abschnitt eines unteren Teils der Kette (90) im Kontakt mit dem Wasser zu halten, wenn sich das Fahrzeug im Wasser befindet, damit die Kette (90) betrieben werden kann, um für den Antrieb zur Bewegung des Fahrzeugs durch und über das Wasser zu sorgen.

## Revendications

1. Un véhicule de neige de loisirs à chenille étant converti en un scooter des mers par un kit de conversion, le véhicule ayant un avant, un arrière, deux côtés, une chenille (90), un système de direction, des suspensions de véhicule (30, 80), et un tunnel (70) ayant deux côtés et une pluralité de trous (179, 189), le kit de conversion comprenant :
a. au moins un dispositif de flottaison avant (100) pour remplacer au moins un ski (10) pour fournir de la flottabilité à l'avant du véhicule ainsi que pour fournir de la direction quand le véhicule est en mouvement,
b. un ensemble de dispositifs de flottaison arrière (130) montables de façon réglable sur les côtés du véhicule, les dispositifs de flottaison arrière (130) étant montables à l'arrière de l'au moins un dispositif de flottaison avant (100); et
c. des supports de montage (172, 176, 182, 186) et au moins un bras (120, 125) auxquels est attaché l'ensemble de dispositifs de flottaison arrière (130),
les supports de montage (176, 186) étant attachables au tunnel (70) via les trous (179, 189), les dispositifs de flottaison arrière (130) étant parallèles les uns aux autres et alignés longitudinalement à l'axe avant-vers-arrière du véhicule, et l'au moins un bras (120, 125) étant vissable à travers la chenille (90) et la suspension de véhicule (80) près du bas du tunnel (70) ; et la distance entre le tunnel (70) et le bas des dispositifs de flottaison arrière (130) étant réglable, l'ensemble de dispositifs de flottaison arrière (130) fournissant de la flottabilité à l'arrière du véhicule tout en laissant au moins une portion d'une partie inférieure de la chenille (90) en contact avec l'eau quand le véhicule est à flot, afin que la chenille (90) soit opérable pour entraîner le mouvement du véhicule à travers et sur l'eau.

2. Le véhicule de neige de loisirs à chenille de la revendication 1 dans lequel l'au moins un dispositif de flottaison (100) est équipé d'une ou plusieurs roues intégrées ou amovibles (200) dans la partie la plus basse de l'au moins un dispositif de flottaison avant (100) pour un fonctionnement amphibie, ou pour faciliter la mise à l'eau et la sortie d'eau du véhicule.

3. Le véhicule de neige de loisirs à chenille de la revendication 1 dans lequel l'au moins un dispositif de flottaison avant (100) est pointu au niveau de son extrémité la plus en avant, et est de n'importe quel profil ou forme de coque hydrodynamiquement utile.

4. Le véhicule de neige de loisirs à chenille de la revendication 1 comprenant en outre au moins un support de montage pour l'au moins un dispositif de flottaison avant (100), dans lequel l'au moins un ski (10) est attaché au système de direction par des éléments de montage, et l'au moins un support de montage est conçu pour être compatible avec les éléments de montage.

5. Le véhicule de neige de loisirs à chenille de la revendication 1 où des moyens sont inclus sur l'au moins un bras (120, 125) et/ou des trous supplémentaires (179, 189) sont inclus dans les côtés du tunnel pour régler la distance entre le tunnel (70) et le bas des dispositifs de flottaison arrière (130) pour régler l'angle d'attaque du véhicule et sa disposition dans l'eau à l'arrêt ainsi que lors d'une utilisation en mouvement motorisé.

6. Le véhicule de neige de loisirs à chenille de la revendication 1 dans lequel au moins un bras (120, 125) est fait de deux tubes d'aluminium carrés de 2" x 2".

7. Le véhicule de neige de loisirs à chenille de la revendication 1 où l'attache des dispositifs de flottaison arrière (130) au véhicule est accomplie en soudant une plaque sur chaque côté de l'au moins un bras (120, 125), les plaques étant espacées pour être directement à côté de la paroi verticale intérieure du tunnel (70), une par côté, pour être boulonnées sur le tunnel (70) à travers des trous dans les plaques qui correspondent aux trous (179, 189) dans le tunnel (70).

8. Le véhicule de neige de loisirs à chenille de la revendication 1 dans lequel les dispositifs de flottaison avant (100) et arrière (130) sont tous de la même taille.

9. Le véhicule de neige de loisirs à chenille de la revendication 1 dans lequel les dispositifs de flottaison avant (100) et arrière (130) sont de tailles différentes.

10. Le véhicule de neige de loisirs à chenille de la revendication 1 dans lequel les dispositifs de flottaison avant (100) et arrière (130) ont chacun une coque.

11. Le véhicule de neige de loisirs à chenille de la revendication 10 où les coques des dispositifs de flottaison avant (100) et arrière (130) comprennent du plastique thermodurci rempli d'une mousse adaptée, et une partie supérieure ou de couvercle de matériau adapté destinée à être scellée aux bords externes et supérieurs du profil de coque, ce qui fournit une rigidité structurelle au dispositif de flottaison, des points de montage étant fournis pour le matériel par lequel le dispositif de flottaison doit être attaché au véhicule.

12. Le véhicule de neige de loisirs à chenille de la revendication 1 dans lequel au moins un des dispositifs de flottaison avant (100) et arrière (130) a une surface de dessus antidérapante pour au moins une portion de sa superficie.

13. Le véhicule de neige de loisirs à chenille de la revendication 10 dans lequel le véhicule comprend en outre un moteur, un siège passager (60), et dans lequel lorsque le kit est installé sur le véhicule et quand le véhicule est en fonctionnement, le véhicule est un scooter des mers grâce à quoi les dispositifs de flottaison arrière (130) fournissent suffisamment de flottabilité pour maintenir le véhicule suffisamment en dehors de l'eau de sorte que, au repos, la partie inférieure de la chenille du véhicule (90) soit dans l'eau et que le moteur, le siège passager (60), et le passager soient hors de l'eau ; et quand le véhicule fonctionne à grande vitesse sur l'eau, le profil de coque des dispositifs de flottaison arrière (130) peut planer ou sortir autrement de l'eau pour soulever le véhicule et sa chenille (90) par rapport à la surface de l'eau d'une façon qui est contrôlée pour maintenir la chenille (90) en contact avec l'eau pour permettre à la chenille (90) de fournir une puissance de propulsion au véhicule, et un contrôle est effectué par le placement initial des dispositifs de flottaison arrière (130) par rapport à la chenille du véhicule, son poids et le déplacement de la coque des dispositifs de flottaison arrière (130), et la quantité d'élévation ou de changement vertical à l'emplacement des dispositifs de flottaison avant et arrière (100, 130) par rapport à la surface de l'eau quand le véhicule et les coques se déplacent dans l'eau à diverses vitesses.

14. L'utilisation d'un véhicule de neige de loisirs à chenille selon la revendication 1 comme scooter des mers, grâce à quoi les dispositifs de flottaison arrière (130) fournissent suffisamment de flottabilité à l'arrière du véhicule pour maintenir au moins une portion d'une partie inférieure de la chenille (90) en contact avec l'eau quand le véhicule est à flot, afin que la chenille (90) soit opérable pour entraîner le mouvement du véhicule à travers et sur l'eau.
